# EUROPÄISCHE PATENTSCHRIFT

(11) **EP 2 353 900 B1**
(45) Veröffentlichungstag und Bekanntmachung des Hinweises auf die Patenterteilung: **24.10.2012**
(21) Anmeldenummer: 11000232.6
(22) Anmeldetag: 13.01.2011
(51) Int. Cl.: B60H 1/34

(54) **Luftausströmer**
Air vent
Dispositif d'écoulement d'air

(30) Priorität: 15.01.2010 DE 202010000979 U
(43) Veröffentlichungstag der Anmeldung: 10.08.2011
(73) Patentinhaber: TRW Automotive Electronics & Components GmbH, 78315 Radolfzell (DE)
(72) Erfinder: Kober, Steve, 08233 Treuen (DE)
(74) Vertreter: Prinz & Partner

(56) Entgegenhaltungen:
- EP-A2- 1 207 062
- FR-A1- 2 645 628
- US-A- 4 957 036
- US-A1- 2006 014 485

## Beschreibung

Die Erfindung betrifft einen Luftausströmer, insbesondere zur Fahrzeugbelüftung, mit einem Rahmen, einem ersten Lamellensystem, das um eine erste Achse schwenkbar im Rahmen gelagert ist, und einem zweiten Lamellensystem, das um eine zweite Achse schwenkbar im Rahmen gelagert ist, wobei ein gemeinsames Bedienelement zum Verschwenken der Lamellensysteme vorgesehen ist, das einen auf einer Lamelle des ersten Lamellensystems gelagerten Schieber und ein mit dem Schieber kardanisch gekoppeltes Verbindungselement aufweist, wobei das Verbindungselement mittels einer Kulissenführung mit einer Lamelle des zweiten Lamellensystems gekoppelt ist. Ein solcher Luftausströmer ist aus US 4 957 036, das als nächstliegender Stand der Technik angesehen wird, offenbart.

Luftausströmer zur Fahrzeugbelüftung weisen zwei schwenkbare Lamellensysteme auf, um die Richtung eines in einen Fahrzeuginnenraum strömenden Luftstroms einstellen zu können. Jedes Lamellensystem weist mehrere parallel zueinander angeordnete Lamellen auf, die jeweils miteinander gekoppelt sind, um diese gemeinsam verschwenken zu können. Die Bedienung erfolgt für beide Lamellensysteme über ein gemeinsames Bedienelement, das einen auf dem ersten, dem Fahrzeuginnenraum zugewandten Lamellensystem verschiebbar gelagerten Schieber aufweist, sowie ein kardanisch mit dem Bedienelement verbundenes Verbindungselement, das mit dem zweiten Lamellensystem, das bei Blickrichtung vom Fahrzeuginnenraum auf das erste Lamellensystem hinter diesem angeordnet ist, gekoppelt ist. Das Verbindungselement ist üblicherweise mit einer Kulissenführung mit dem zweiten Lamellensystem gekoppelt, wobei die Kulissenführung durch einen in einer Lamelle des zweiten Belüftungssystems vorgesehenen Schlitz gebildet ist. Die Lamelle ist im Bereich der Kulissenführung durch den Schlitz auf einen schmalen Steg reduziert, wodurch die Stabilität der Lamelle erheblich geschwächt ist. Um eine ausreichende Stabilität der Lamelle zu erzielen, ist eine gewisse Breite dieses Steges notwendig, die nur durch eine breitere Ausführung der Lamellen des zweiten Lamellensystems möglich ist, wodurch aber die Einbautiefe des Luftausströmers vergrößert wird.

Aufgabe der Erfindung ist es, einen Luftausströmer der eingangs genannten Art zu schaffen, der eine geringere Einbautiefe bei größerer Stabilität der Lamellen aufweist.

Erfindungsgemäß ist dafür ein Luftausströmer vorgesehen, insbesondere zur Fahrzeugbelüftung, mit einem Rahmen, einem ersten Lamellensystem, das um eine erste Achse schwenkbar im Rahmen gelagert ist, und einem zweiten Lamellensystem, das um eine zweite Achse schwenkbar im Rahmen gelagert ist. Zum Verschwenken der Lamellensysteme ist ein gemeinsames Bedienelement vorgesehen, das einen auf einer Lamelle des ersten Lamellensystems gelagerten Schieber und ein mit dem Schieber kardanisch gekoppeltes Verbindungselement aufweist, wobei das Verbindungselement mittels einer Kulissenführung mit einer Lamelle des zweiten Lamellensystems gekoppelt ist. Das Verbindungselement ist gabelförmig ausgebildet und die Kulissenführung durch zwei beidseitig an der Lamelle ausgebildete parallele Nuten und zwei an der Innenseite der Gabelenden des Verbindungselements vorgesehene Zapfen gebildet. Das Verbindungselement umfasst mit den beiden Gabelenden die Lamelle und ist durch die Zapfen, die in die Nuten eingreifen, an dieser geführt. Die Stabilität der Lamelle bleibt so weitgehend erhalten, da die Lamelle nicht durch einen Schlitz geteilt und geschwächt wird. Die Kulissenführung kann über die gesamte Länge der Lamelle ausgebildet sein, so dass die Länge der Lamellen und somit die Einbautiefe reduziert werden können.

Zur besseren Führung des Verbindungselements an der Lamelle des zweiten Lamellensystems sind am Verbindungselement vorzugsweise zwei Führungselemente vorgesehen, die jeweils an einer Seitenfläche der Lamelle anliegen. Das Verbindungselement liegt mit den Führungselementen und den Zapfen an der Lamelle an, so dass diese einen Hebel bilden, um die Lamelle zu schwenken. Da das Verbindungselement nur punktuell an der Lamelle anliegt, können Verschleißspuren, beispielsweise Kratzer, deutlich reduziert bzw. vermieden werden.

Die Führungselemente können beispielsweise durch zwei auf der Gabelinnenseite vorgesehene Vorsprünge gebildet sein. Die Führungselemente stehen nicht von Gabel vor, so dass ein Verhaken an anderen Bauteilen sicher verhindert ist.

Um zu vermeiden, dass die als Vorsprünge ausgebildeten Führungselemente in die Nut der Kulissenführung eingeschoben werden, ist der Querschnitt der Vorsprünge vorzugsweise größer als der Querschnitt der Nut. Ein Verklemmen des Bedienelements ist so sicher verhindert.

Die Lamellen sind üblicherweise in Strömungsrichtung tropfenförmig ausgebildet. D.h. die Dicke der Lamelle nimmt zur Mitte der Lamelle hin zu. Um zu verhindern, dass die Führungselemente entweder an einer dickeren Stelle der Lamelle klemmen oder an einer dünneren Stelle der Lamelle Spiel haben, weist die Nut vorzugsweise eine variierende Tiefe auf. Die Tiefe der Nut ist so ausgebildet, dass die Gabel des Verbindungselements durch die in der Nut gleitenden Zapfen so aufgespreizt wird, dass die an der Gabelinnenseite angeordneten Führungselemente stets mit gleichem Abstand zur Seitenfläche der Lamelle geführt werden.

Idealerweise ist die Nut konvex ausgebildet. Durch eine konvexe, parallel zum Kontaktbereich der Führungselemente an der Lamellenseitenfläche ausgebildete Nut ist ein gleichbleibend guter Kontakt der Führungselemente gewährleistet.

Das Verbindungselement kann einen zwischen den Gabelseiten angeordneten Steg aufweisen, der an einer an der Lamelle vorgesehenen Führungsfläche anliegt. Das Verbindungselement stützt sich über die Führungsfläche an der Lamelle ab, so dass es zwischen dem ersten Lamellensystem und dem zweiten Lamellensystem sicher geführt ist.

Die Führungsfläche ist vorzugsweise die dem Bedienelement zugewandte Kante der Lamelle. Das Verbindungselement stützt sich an dieser ab und ist so sicher zwischen Bedienelement und der Lamelle des zweiten Lamellensystems gehalten.

Die Führungsfläche ist beispielsweise gekrümmt ausgebildet, wobei die Krümmung so ausgebildet ist, dass der Abstand zwischen dem Schieber auf der ersten Lamelle und der Führungsfläche unabhängig von der Position des Schiebers bzw. des ersten Lamellensystems gleichbleibend ist. Dadurch ist das Verbindungselement zwischen Schieber und der Führungsfläche sicher geführt und gehalten.

Die Nuten erstrecken sich vorzugsweise jeweils bis zu einer Kante der Lamelle, insbesondere zur dem Bedienelement zugewandten Kante der Lamelle. Das Bedienelement kann so bei der Montage des Luftausströmers einfach von der Vorderseite auf die Lamelle des zweiten Lamellensystems aufgeschoben werden.

Die Nuten können beispielsweise zumindest abschnittsweise geradlinig ausgebildet sein. Es ist aber auch denkbar, dass die Nuten abhängig von den Einbaubedingungen teilweise gekrümmt ausgebildet sind.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Luftausströmers,
- Figur 2 eine Explosionsansicht der Lamellensysteme des Luftausströmers aus Figur 1,
- Figur 3 das Verbindungselement des Luftausströmers aus Figur 1,
- Figur 4 eine Detailansicht des zweiten Lamellensystems des Luftausströmers aus Figur 1,
- Figur 5 eine zweite perspektivische Ansicht des zweiten Lamellensystems des Luftausströmers aus Figur 1,
- Figur 6 eine Schnittansicht durch die Lamelle im Bereich der Nut,
- Figur 7 eine Teilschnittansicht des Luftausströmers aus Figur 1,
- Figur 8 eine zweite Teilschnittansicht des Luftausströmers aus Figur 1, und
- Figur 9 eine dritte Teilschnittansicht des Luftausströmers aus Figur 1.

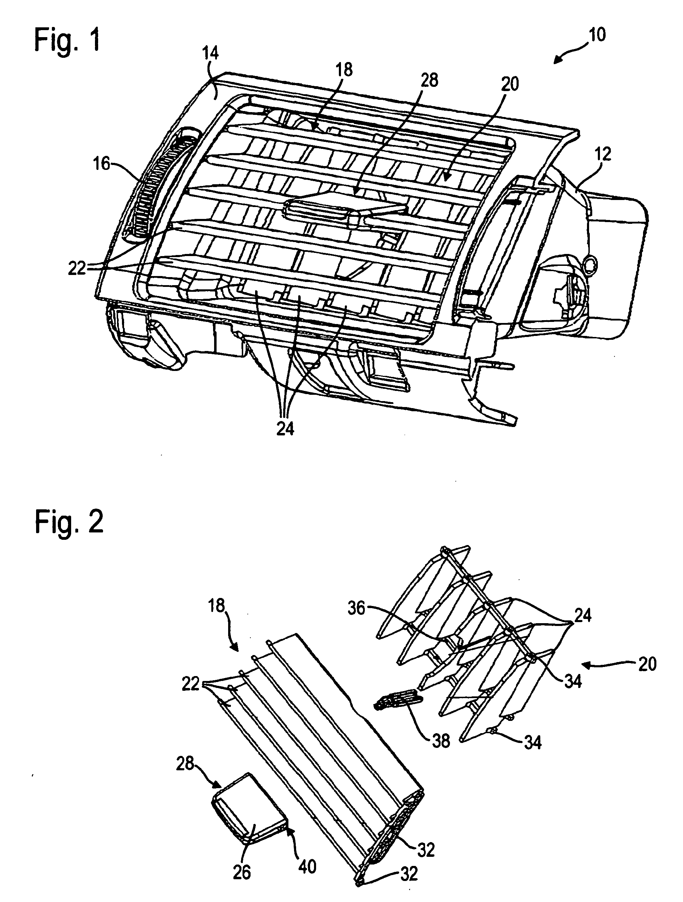

Der in Figur 1 dargestellte Luftausströmer 10 hat einen Rahmen 12, der einen Luftführungskanal definiert, eine Blende 14, die beispielsweise Teil einer Fahrzeuginnenraumverkleidung sein kann, sowie ein Stellrad 16, das mit einer Absperrklappe gekoppelt ist, so dass der Luftstrom des Luftausströmers 10 reguliert werden kann. Im Rahmen 12 sind ein erstes Lamellensystem 18 und ein zweites Lamellensystem 20 angeordnet. Das erste Lamellensystem 18, das hier dem Fahrzeuginnenraum zugewandt ist, weist mehrere parallel zueinander angeordnete, im Einbauzustand des Luftausströmers 10 waagrecht verlaufende Lamellen 22 auf. Die Lamellen 24 des zweiten Lamellensystems 20, das hier hinter dem ersten Lamellensystem 18 angeordnet ist, sind senkrecht zu den Lamellen 22 des ersten Lamellensystems angeordnet. Auf einer Lamelle 22 des ersten Lamellensystems 18 ist ein Bedienelement 28 gelagert, um die Lamellensysteme 18, 20 zu verstellen.

Wie in Figur 2 zu sehen ist, sind die Lamellen 22 des ersten Lamellensystems 18 in zwei parallelen Trägerrahmen 30, von denen hier nur einer dargestellt ist, schwenkbar im Rahmen 12 gelagert. Über ein Koppelelement 32 sind die Lamellen miteinander gekoppelt, so dass diese gemeinsam verschwenkt werden können. Die Lamellen 24 des zweiten Lamellensystems 20 sind vertikal verschwenkbar in zwei gegenüberliegenden Trägerrahmen 34 gelagert und mit einem Koppelelement 36 miteinander verbunden.

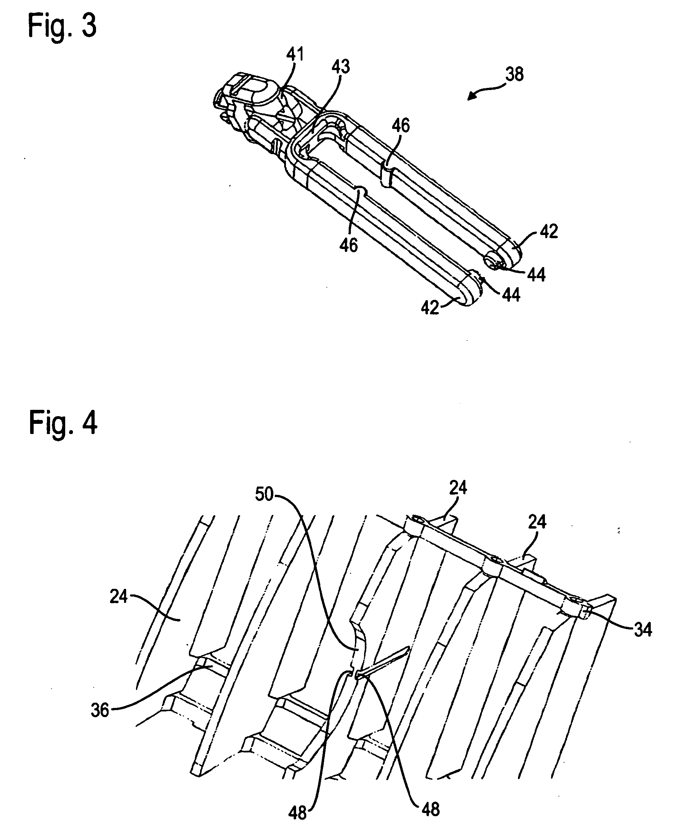

Das Bedienelement 28 weist einen Schieber 26 und ein Verbindungselement 38 auf. Der Schieber 26 hat eine Aussparung 40, mit der der Schieber 26 in Richtung der Lamellen 22 des ersten Lamellensystems 18 verschiebbar auf einer Lamelle 22 gelagert ist. Das Verbindungselement 38 ist zwischen dem erstem Lamellensystem 18 und dem zweitem Lamellensystem 20 angeordnet und weist ein Gelenk 41 auf, mit dem das Verbindungselement kardanisch mit dem Schieber 26 verbunden ist (siehe Figur 3). Das vom ersten Lamellensystem 18 weg gerichtete zweite Ende des Verbindungselements 38 ist gabelförmig ausgebildet, wobei zwischen den zwei Gabelenden 42 ein Steg 43 vorgesehen ist. Auf der Innenseite der Gabelenden 42 ist jeweils ein Zapfen 44 vorgesehen. Desweiteren sind an der Innenseite der Gabel jeweils Führungselemente 46 vorgesehen, die hier als Vorsprünge ausgebildet sind.

An einer Lamelle 24 des zweiten Lamellensystems 20 sind beidseitig parallel zueinander verlaufende Nuten 48 vorgesehen (Figur 4), die sich bis an die vordere, dem Verbindungselement 38 zugewandte Kante der Lamelle 24 erstrecken. An der Vorderseite der Lamelle 24 ist desweiteren eine Führungsfläche 50 vorgesehen, die hier konkav ausgebildet ist.

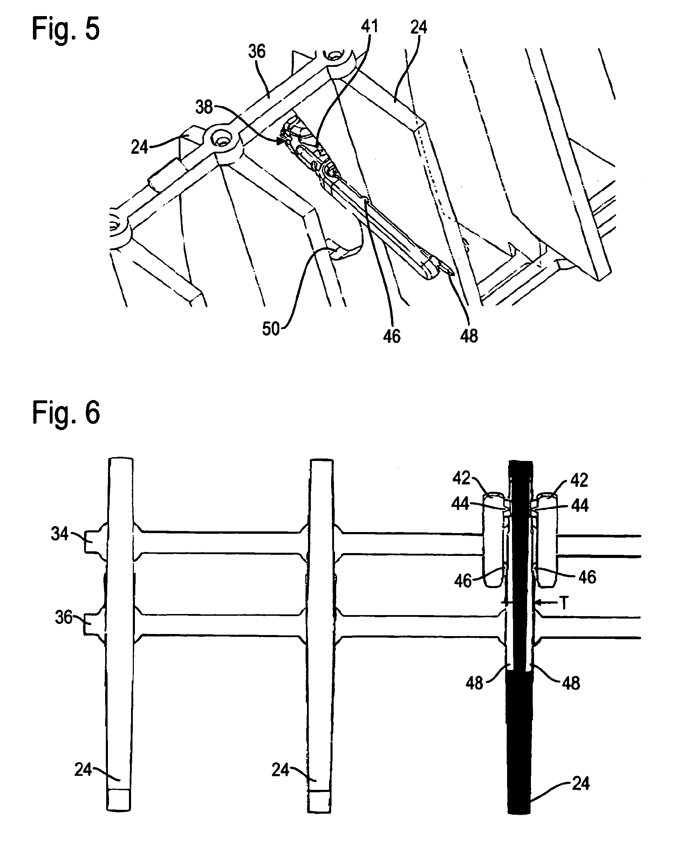

Das Verbindungselement 38 ist mit dem gabelförmigen Ende so weit auf die Lamelle 24 aufgeschoben, dass der Steg 43 an der Führungsfläche 50 an der Vorderseite der Lamelle 24 anliegt (Figur 5). Die Zapfen 44 des Verbindungselements 38 greifen in die Nuten 48 ein und sind in diesen geführt, die Führungselemente 46 liegen jeweils an einer Seitenfläche der Lamelle an. Es ist auch denkbar, dass die Führungselemente 46 einen minimalen Abstand zur Lamelle 24 aufweisen. Das Verbindungselement 38 ist in dieser Position zwischen Schieber 26 und zweitem Lamellensystem 20 sicher gehalten und kann in horizontaler Richtung um die Zapfen 44 verschwenkt bzw. in Richtung der Nuten 48 auf der Lamelle verschoben werden.

Bei einer vertikalen Bewegung des Schiebers 26 dient der Schieber 26 als Hebel, um die Lamellen 22 des ersten Lamellensystems 18 vertikal zu verschwenken und so den Luftstrom in vertikaler Richtung ablenken zu können.

Wird der Schieber in horizontaler Richtung auf der Lamelle 22 verschoben, dient das Bedienelement 28 über das mit den Zapfen 44 und den Führungselemente 46 an der Lamelle 24 anliegende Verbindungselement 38 als Hebel, um das zweite Lamellensystem 20 in horizontaler Richtung zu verschwenken, wodurch der Luftstrom in horizontaler Richtung abgelenkt wird. Da das Verbindungselement 38 nur punktuell an der Lamelle 24 anliegt, können Verschleißspuren an der Lamelle 24, beispielsweise Kratzer, deutlich reduziert oder ganz vermieden werden. Um die Leichtgängigkeit des Luftausströmers weiter zu erhöhen, kann die Nut bzw. die Führungsfläche beispielsweise poliert sein, so dass die Reibung zwischen Lamelle 24 und Verbindungselement weiter verringert wird.

Um ein Einschieben der Führungselemente 46 in die Nut 48 zu verhindern, weisen die Führungselemente 46 einen größeren Querschnitt auf als die Nut 48. Ein Verklemmen des Bedienelements 28 durch die Führungselemente 46 in der Nut 48 ist so sicher verhindert.

Wie in Figur 6 zu sehen ist, sind die Lamellen 24 tropfenförmig ausgebildet. Die Nut 48 weist hier eine im Richtung R der Nut 48 variierende Tiefe T auf. Beim Verschieben des Verbindungselements 38 in der Nut 48 werden die Gabelenden 42 durch die in der Nut 48 geführten Zapfen 44 aufgespreizt, bzw. können, wenn die Nut tiefer ausgebildet ist, näher zusammenrücken, wodurch sich jeweils auch der Abstand der Führungselemente 46 zueinander verändert. Die Tiefe T der Nut 48 ist so ausgebildet, dass der Abstand der Führungselemente 46 zur tropfenförmig ausgebildeten Lamelle 24 jeweils unabhängig von der Position des Verbindungselements 38 gleichbleibend ist, so dass ein gleichbleibend guter Kontakt der Führungselemente 46 mit der Lamelle 24 gewährleistet ist. Die Führungselemente 46 können dabei die Lamelle 24 berühren oder in minimalem Abstand zur Lamelle 24 geführt sein.

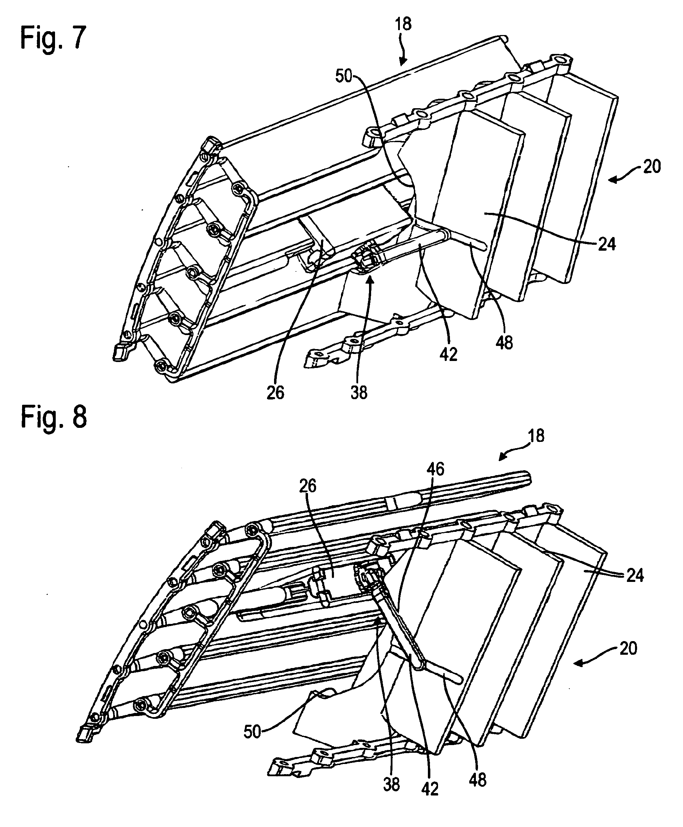

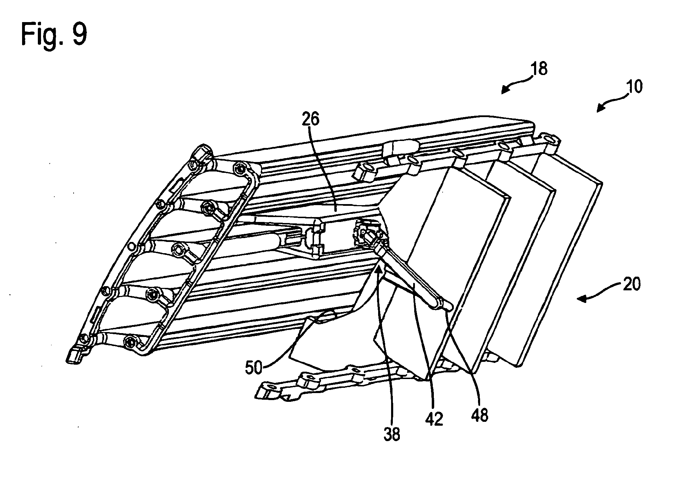

Wie in den Figuren 7 bis 9 dargestellt, die verschiedene Ausrichtungen des ersten Lamellensystems 18 zeigen, hat das Verbindungselement 38 unabhängig von der Position des ersten Lamellensystems 18 über die Führungselemente 46 und die durch die Nut 48 und die Zapfen 44 gebildete Kulissenführung einen gleichbleibend guten Kontakt.

Die Nuten 48 sind hier geradlinig ausgebildet und erstrecken sich von der dem Bedienelement zugewandten Kante der Lamelle 24 bis annähernd zur gegenüberliegenden Kante der Lamelle 24. Wäre die Kulissenführung in diesem Fall als Schlitz ausgebildet, wäre eine ausreichende Stabilität der Lamelle 24 nicht mehr gewährleistet. Durch die Ausführung der Kulissenführung als Nut 48 auf der Lamelle 24 ist somit eine wesentlich geringere Bautiefe zu realisieren.

## Patentansprüche

1. Luftausströmer (10), insbesondere zur Fahrzeugbelüftung, mit einem Rahmen (12), einem ersten Lamellensystem (18), das um eine erste Achse schwenkbar im Rahmen (12) gelagert ist, und einem zweiten Lamellensystem (20), das um eine zweite Achse schwenkbar im Rahmen (12) gelagert ist,
wobei ein gemeinsames Bedienelement (28) zum Verschwenken der Lamellensysteme (18, 20) vorgesehen ist, das einen auf einer Lamelle (22) des ersten Lamellensystems (18) gelagerten Schieber (26) und ein mit dem Schieber (26) kardanisch gekoppeltes Verbindungselement (38) aufweist, wobei das Verbindungselement (38) mittels einer Kulissenführung mit einer Lamelle (24) des zweiten Lamellensystems (20) gekoppelt ist, wobei
das Verbindungselement (38) gabelförmig ausgebildet ist, **dadurch gekennzeichnet, dass** die Kulissenführung durch zwei beidseitig an der Lamelle (24) ausgebildete parallele Nuten (48) und zwei an der Innenseite der Gabelenden (42) des Verbindungselements (38) vorgesehene Zapfen (44) gebildet ist.

2. Luftausströmer nach Anspruch 1, **dadurch gekennzeichnet, dass** am Verbindungselement (38) zwei Führungselemente (46) vorgesehen sind, die jeweils an einer Seitenfläche der Lamelle anliegen.

3. Luftausströmer nach Anspruch 2, **dadurch gekennzeichnet, dass** die Führungselemente (46) durch auf der Gabelinnenseite vorgesehene Vorsprünge gebildet sind.

4. Luftausströmer nach Anspruch 3, **dadurch gekennzeichnet, dass** der Querschnitt der Vorsprünge größer ist als der Querschnitt der Nut (48).

5. Luftausströmer nach einem der vorhergehenden Ansprüche, **dadurch gekennzeichnet, dass** die Nut (48) eine in Richtung der Nut (48) variierende Tiefe aufweist.

6. Luftausströmer nach Anspruch 5, **dadurch gekennzeichnet, dass** die Nut (48) in Richtung der Nut (48) konvex ausgebildet ist.

7. Luftausströmer nach einem der vorhergehenden Ansprüche, **dadurch gekennzeichnet, dass** das Verbindungselement (38) einen zwischen den Gabelseiten angeordneten Steg (43) aufweist, der an einer an der Lamelle vorgesehenen Führungsfläche (50) anliegt.

8. Luftausströmer nach Anspruch 7, **dadurch gekennzeichnet, dass** die Führungsfläche (50) die dem Bedienelement (28) zugewandte Kante der Lamelle (24) ist.

9. Luftausströmer nach einem der Ansprüche 7 bis 8, **dadurch gekennzeichnet, dass** die Führungsfläche (50) gekrümmt ist.

10. Luftausströmer nach einem der vorhergehenden Ansprüche, **dadurch gekennzeichnet, dass** die Nuten sich jeweils bis zu einer Kante der Lamelle (24), insbesondere zur dem Bedienelement (28) zugewandten Kante der Lamelle, erstrecken.

11. Luftausströmer nach einem der vorhergehenden Ansprüche, **dadurch gekennzeichnet, dass** die Nuten (48) zumindest abschnittsweise geradlinig ausgebildet sind.

## Claims

1. An air vent (10), in particular for vehicle ventilation, comprising a frame (12), a first vane system (18) mounted for pivoting movement about a first axis in the frame (12), and a second vane system (20) mounted for pivoting movement about a second axis in the frame (12),
a common operating element (28) being provided for pivoting the vane systems (18, 20), which has a slider (26) mounted on a vane (22) of the first vane system (18) and a connecting element (38) cardanically coupled to the slider (26), the connecting element (38) being coupled to a vane (24) of the second vane system (20) by means of a slotted guide,
the connecting element (38) being configured so as to have the shape of a fork, **characterized in that** the slotted guide is formed by two parallel grooves (48) realized on either side of the vane (24) and by two pins (44) provided on the inner side of the fork ends (42) of the connecting element (38).

2. The air vent according to claim 1, **characterized in that** the connecting element (38) is provided with two guiding elements (46) each resting against a side face of the vane.

3. The air vent according to claim 2, **characterized in that** the guiding elements (46) are formed by projections provided on the inner side of the fork.

4. The air vent according to claim 3, **characterized in that** the cross-section of the projections is larger than the cross-section of the groove (48).

5. The air vent according to any of the preceding claims, **characterized in that** the groove (48) has a depth varying in the direction of the groove (48).

6. The air vent according to claim 5, **characterized in that** the groove (48) is configured so as to be convex in the direction of the groove (48).

7. The air vent according to any of the preceding claims, **characterized in that** the connecting element (38) includes a web (43) which is arranged between the faces of the fork and rests against a guiding surface (50) provided on the vane.

8. The air vent according to claim 7, **characterized in that** the guiding surface (50) is the edge of the vane (24) which faces the operating element (28).

9. The air vent according to any of claims 7 to 8, **characterized in that** the guiding surface (50) is curved.

10. The air vent according to any of the preceding claims, **characterized in that** the grooves each extend up to an edge of the vane (24), in particular to the edge of the vane which faces the operating element (28).

11. The air vent according to any of the preceding claims, **characterized in that** the grooves (48) are configured at least partially in a straight line.

## Revendications

1. Diffuseur d'air (10), en particulier pour l'aération de véhicules, comportant un cadre (12), un premier système à lamelles (18) monté à pivotement autour d'un premier axe dans le cadre (12), et un deuxième système à lamelles (20) monté à pivotement autour d'un deuxième axe dans le cadre (12),
un élément de commande (28) commun étant prévu pour le pivotement des systèmes à lamelles (18, 20), lequel présente un coulisseau (26) agencé sur une lamelle (22) du premier système à lamelles (18), ainsi qu'un élément de raccordement (38) couplé par cardan au coulisseau (26), l'élément de raccordement (38) étant couplé à une lamelle (24) du deuxième système à lamelles (20) au moyen d'un guide à coulisse,
l'élément de raccordement (38) étant réalisé de manière fourchue, **caractérisé en ce que** le guide à coulisse est formé par deux gorges (48) parallèles réalisées des deux côtés de la lamelle (24) et par deux tenons (44) prévus sur la face intérieure des extrémités de fourche (42) de l'élément de raccordement (38).

2. Diffuseur d'air selon la revendication 1, **caractérisé en ce que** deux éléments de guidage (46) qui sont chacun en appui sur une face latérale de la lamelle sont prévus sur l'élément de raccordement (38).

3. Diffuseur d'air selon la revendication 2, **caractérisé en ce que** les éléments de guidage (46) sont formés par des saillies prévues sur la face intérieure de la fourche.

4. Diffuseur d'air selon la revendication 3, **caractérisé en ce que** la section transversale des saillies est supérieure à la section transversale de la gorge (48).

5. Diffuseur d'air selon l'une des revendications précédentes, **caractérisé en ce que** la gorge (48) présente une profondeur qui varie dans le sens de la gorge (48).

6. Diffuseur d'air selon la revendication 5, **caractérisé en ce que** la gorge (48) est réalisée convexe dans le sens de la gorge (48).

7. Diffuseur d'air selon l'une des revendications précédentes, **caractérisé en ce que** l'élément de raccordement (38) présente une barrette (43) qui est agencée entre les faces de la fourche et qui est en appui sur une surface de guidage (50) prévue sur la lamelle.

8. Diffuseur d'air selon la revendication 7, **caractérisé en ce que** la surface de guidage (50) est l'arête de la lamelle (24), qui est tournée vers l'élément de commande (28).

9. Diffuseur d'air selon l'une des revendications 7 à 8, **caractérisé en ce que** la surface de guidage (50) est courbe.

10. Diffuseur d'air selon l'une des revendications précédentes, **caractérisé en ce que** les gorges s'étendent chacune jusqu'à une arête de la lamelle (24), en particulier jusqu'à l'arête de la lamelle, qui est tournée vers l'élément de commande (28).

11. Diffuseur d'air selon l'une des revendications précédentes, **caractérisé en ce que** les gorges (48) sont au moins partiellement réalisées en ligne droite.
